# EUROPÄISCHE PATENTSCHRIFT

(11) **EP 3 714 505 B1**
(45) Veröffentlichungstag und Bekanntmachung des Hinweises auf die Patenterteilung: **29.05.2024**
(21) Anmeldenummer: 19704216.1
(22) Anmeldetag: 24.01.2019
(51) Int. Cl.: H01M 10/48, H01M 10/42, H02J 7/00

(54) **SENSORVORRICHTUNG UND VERFAHREN ZU DEREN BETRIEB**
SENSOR DEVICE AND METHOD FOR ITS OPERATION
DISPOSITIF CAPTEUR ET PROCÉDÉ DE FONCTIONNEMENT

(30) Priorität: 21.02.2018 EP 18157750
(43) Veröffentlichungstag der Anmeldung: 30.09.2020
(73) Patentinhaber: Siemens Aktiengesellschaft, 80333 München (DE)
(72) Erfinder: ZETTNER, Jürgen, 90587 Veitsbronn (DE); SCHEIBNER, Dirk, 90473 Nürnberg (DE)
(74) Vertreter: Siemens Patent Attorneys
(86) Internationale Anmeldenummer: PCT/EP2019/051731
(87) Internationale Veröffentlichungsnummer: WO 2019/162034

(56) Entgegenhaltungen:
- EP-A1- 2 830 145
- EP-A2- 2 917 958
- US-A- 5 907 491
- US-A1- 2005 062 455
- US-A1- 2013 317 659

## Beschreibung

Die Erfindung betrifft ein Verfahren zum Betrieb einer Sensorvorrichtung zur Überwachung eines Antriebssystems, insbesondere zur Überwachung einer elektrischen Maschine, eine Sensorvorrichtung und ein Auswertesystem, die zur Durchführung des Verfahrens eingerichtet sind, sowie ein Antriebssystem, das die Sensorvorrichtung und das Auswertesystem umfasst.

Insbesondere zur Überwachung elektrischer Maschinen werden häufig Sensorvorrichtungen eingesetzt, die als Smart Sensor Boxen oder Condition Monitoring Boxen (CM-Boxen) bezeichnet werden und Messdaten, beispielsweise von Schwingungen oder Temperaturen, erfassen. Um Verkabelungsaufwand zu vermeiden oder zu reduzieren, weisen derartige Sensorvorrichtungen häufig Batterien zu ihrer Energieversorgung und kabellose Kommunikationsvorrichtungen, insbesondere zur kabellosen Übermittlung der erfassten Messdaten, auf, beispielsweise Kommunikationsvorrichtungen zur Kommunikation mittels Funksignalen gemäß einem Bluetooth- oder WLAN-Standard (WLAN = Wireless Local Area Network) .

Unter einer Batterie wird hier ein Speicher für elektrische Energie auf elektrochemischer Basis verstanden, der wiederaufladbar oder nicht wiederaufladbar ausgebildet sein kann. Insbesondere werden hier also Akkumulatoren zu den Batterien gezählt. Eine Batterie für eine Sensorvorrichtung wird, insbesondere hinsichtlich ihrer Kapazität und ihren Entladeströmen, in Abhängigkeit von einem zu erwartenden Energiebedarf der Sensorvorrichtung sowie von einem angenommenen Temperaturprofil der Sensorvorrichtung ausgelegt. Im Fall eines Akkumulators beeinflussen neben dem Entladestrom viele weitere Einflussgrößen das Speichervermögen des Akkumulators, beispielsweise die Temperatur, Alterungseffekte, der Recovery-Effekt, die zunehmenden Verluste an einem Innenwiderstand des Akkumulators sowie die begrenzte Geschwindigkeit der elektrochemischen Prozesse und Ladungstransportvorgänge im Akkumulator. Um einen Akkumulator optimal für eine Sensorvorrichtung auszulegen, sind daher auch diese Einflussgrößen zu berücksichtigen.

Jedoch lassen sich viele dieser für die Auslegung einer Batterie relevanten Größen im Voraus nur sehr schwierig beziehungsweise mit großen Unsicherheiten abschätzen. Beispielsweise umfasst der Energiebedarf einer Sensorvorrichtung sowohl den Energiebedarf für die Erfassung und Verarbeitung von Messdaten als auch den Energiebedarf für die (Funk-)Kommunikation. Bei der Abschätzung des Energiebedarfes ist ferner zu berücksichtigen, dass eine Sensorvorrichtung in der Regel in einem Mischbetrieb mit verschiedenen Betriebsmodi betrieben wird, die sich hinsichtlich ihres jeweiligen Energiebedarfes voneinander unterscheiden. Die im Realbetrieb der Sensorvorrichtung auf die einzelnen Betriebsmodi entfallenden Betriebszeiten und damit der jeweils für einen Betriebsmodus insgesamt anfallende Energiebedarf lassen sich im Voraus nur schwierig abschätzen, da beispielsweise in kritischen Betriebszuständen eines mit der Sensorvorrichtung überwachten Antriebssystems Messdaten in kurzen Zeitabständen angefordert werden, um den Zustand des Antriebssystems schnell und zuverlässig zu überwachen.

Ferner sind sowohl der Energiebedarf einer Sensorvorrichtung als auch die Kapazität und Alterungseffekte einer Batterie stark temperaturabhängig. Eine Vorhersage eines Temperaturverlaufs der Temperatur einer Sensorvorrichtung ist jedoch ebenfalls mit großen Unsicherheiten behaftet.

Es ist daher äußerst schwierig und praktisch nicht möglich, für eine batteriebetriebene Sensorvorrichtung im Voraus zuverlässig eine dem realen Betrieb der Sensorvorrichtung optimal angepasste Batterie zu bestimmen. Eine in einer Sensorvorrichtung verbaute Batterie erweist sich daher im Betrieb der Sensorvorrichtung in der Regel entweder als unterdimensioniert oder als überdimensioniert. Im Fall einer unterdimensionierten Batterie wird die Funktionstüchtigkeit der Sensorvorrichtung beeinträchtigt, insbesondere ist ein Ausfall der Sensorvorrichtung vor dem Ablauf einer für die Sensorvorrichtung vorgesehenen Betriebsdauer möglich. Im Fall einer überdimensionierten Batterie wird die Sensorvorrichtung in der Regel nicht kostenoptimal ausgeführt, da eine zu aufwendige und daher zu teure Batterie eingesetzt wird.

Die Offenlegungsschrift US 2013/317659 A1 beschreibt ein verteiltes drahtloses Überwachungssystem mit Low-Power Remote-Sensoren, welches eine Datencodierung/-kompression an den Sensoren beinhaltet, um den Stromverbrauch durch Übertragung und Speicherung zu reduzieren. Ferner beinhaltet das Überwachungssystem einen ereignisgesteuerten Betrieb/Datenprotokollierung, eine Remote-Konfiguration von ereignisauslösenden Schwellenwerten und Korrelations-Templates, verteilte Verarbeitungsmöglichkeiten und eine Sensor-Clock-Synchronisation über einen Netzwerkzeitdienst.

Die Offenlegungsschrift EP 2 830 145 A1 beschreibt ein Verfahren zur Überwachung von Batteriespeichern, das Folgendes beinhaltet: Empfangen von Identifikationsinformationen, die ein Batteriespeichersystem kennzeichnen, und charakteristischen Daten, die einen Zustand von mindestens einem Batteriespeicher anzeigen; Bestimmen eines Alterungsmodells, das dem mindestens einen Batteriespeicher entspricht, basierend auf den empfangenen charakteristischen Daten, aus den in einer Datenbank verwalteten Altersmodellen, die die Alterungstendenzen weiterer Batteriespeicher anzeigen; Erzeugen von Steuerdaten über das Kommunikationsnetzwerk zum Verbessern eines Alterungszustands des mindestens einen Batteriespeichers zu einem vorbestimmten Zeitpunkt gemäß dem entsprechenden Altersmodell; Übertragen der erzeugten Steuerdaten an das Batteriespeichersystem; und Steuern des mindestens einen Batteriespeichers in dem Batteriespeichersystem basierend auf den übertragenen Steuerdaten.

Aus der EP 2917958 A2 ist eine elektrische batteriebetriebene Einrichtung bekannt, mit einer oder mehreren elektrischen Batterien, die ein separates elektronisches Gerät mit Strom versorgen, mit einem oder mehreren Sensoren, die externe Bedingungen überwachen, mit einer Rechenvorrichtung, die mit jedem Sensor in Verbindung steht und mit einem Computerprogramm, das Programmmodule umfasst, die von der Computervorrichtung ausgeführt werden, wobei die Computervorrichtung von den Programmmodulen des Computerprogramms angewiesen wird, zumindest den Betrieb jedes Sensors zu steuern.

Aus der US2005062455A1 ist ein Verfahren zur Empfehlung eines Batterietyp zur Verwendung mit einem batteriebetriebenen Gerät basierend auf einem für das Gerät bestimmten Verwendungsmodell bekannt. Der empfohlene Batterietyp hat je nach Nutzungsmodell einen konstruktiven Einfluss auf die Geräteleistung und/oder die Batterieleistung oder die Lebensdauer während der Gerätenutzung. Ferner wird die Gerätenutzung überwacht, um das Nutzungsmodell zu bestimmen. Sowohl das Nutzungsmodell als auch der empfohlene Batterietyp sind basierend auf der überwachten Gerätenutzung adaptiv.

Aus der US 5907491 A ist ein drahtloses Maschinenüberwachungs- und Kommunikationssystem bekannt, welches einen oder mehrere Maschinenmonitore umfasst, die an einer oder mehreren Maschinen angebracht sind, um eine physikalische Eigenschaft der Maschine zu erfassen, wie z.B. Vibration oder Temperatur, und um eine drahtlose Übertragung entsprechend der erfassten Eigenschaft zu erzeugen. Um Energie zu sparen, werden die Maschinenmonitore nur zu vorprogrammierten Zeiten in Übereinstimmung mit einem Zeitmultiplex-Kommunikationsprotokoll eingeschaltet. Ein Mikrocomputer in jedem Monitor analysiert Sensordaten und ein Speicher speichert die analysierten Sensordaten.

Der Erfindung liegt die Aufgabe zugrunde, eine insbesondere hinsichtlich ihrer Auslegung und ihres Betriebs verbesserte batteriebetriebene Sensorvorrichtung anzugeben.

Die Aufgabe wird erfindungsgemäß durch ein Verfahren mit den Merkmalen des Anspruchs 1 und einer Sensorvorrichtung und einem Auswertesystem mit den Merkmalen des Anspruchs 10 gelöst.

Vorteilhafte Ausgestaltungen der Erfindung sind Gegenstand der abhängigen Ansprüche.

Das erfindungsgemäße Verfahren betrifft den Betrieb einer Sensorvorrichung zur Überwachung eines Antriebssystems, die eine Versorgungsbatterie zur Energieversorgung der Sensorvorrichtung, eine Sensoreinheit, mit der Betriebszustandsdaten der Versorgungsbatterie erfassbar sind, und eine Kommunikationseinheit, mit der die Betriebszustandsdaten einem Auswertesystem übermittelbar sind, aufweist. Bei dem Verfahren werden mit der Sensoreinheit zu verschiedenen Messzeitpunkten Betriebszustandsdaten erfasst, mit der Kommunikationseinheit werden die Betriebszustandsdaten und von der Sensoreinheit erfasste Maschinenmessdaten an das Auswertesystem übermittelt und von dem Auswertesystem wird ein Energiebedarf der Sensorvorrichtung ermittelt und anhand der Betriebszustandsdaten und des Energiebedarfs eine Handlungsempfehlung zum optimierten Betrieb der Sensorvorrichtung generiert. In dem Auswertesystem werden Batterietypdaten verschiedener Batterietypen vorgehalten, wobei von dem Auswertesystem anhand der Betriebszustandsdaten, des Energiebedarfs und der Batterietypdaten ein Präferenzbatterietyp bestimmt wird und als Handlungsempfehlung der Betrieb der Sensorvorrichtung mit einer Batterie des Präferenzbatterietyps als Versorgungsbatterie generiert wird. Die Betriebszustandsdaten werden mittels des Auswertesystems mit statistischen Methoden ausgewertet. Der Energiebedarf aus Zeitanteilen, die auf den Betrieb der Sensorvorrichtung in verschiedenen Betriebsmodi jeweils entfallen, und Leistungen, die für den Betrieb der Sensorvorrichtung in den Betriebsmodi jeweils benötigt werden, wird ermittelt. Als Betriebszustandsdaten werden Batteriespannungen und Batterietemperaturen der Versorgungsbatterie erfasst.

Die Erfindung sieht also vor, mit der Sensorvorrichtung neben Messdaten, deren Erfassung die eigentliche Aufgabe der Sensorvorrichtung ist, auch Betriebszustandsdaten der Versorgungsbatterie zu erfassen und einem Auswertesystem zu übermitteln. Anhand der Betriebszustandsdaten und eines von dem Auswertesystem ermittelten Energiebedarfs der Sensorvorrichtung wird von dem Auswertesystem eine Handlungsempfehlung zum optimierten Betrieb der Sensorvorrichtung generiert. Die Erfindung ermöglicht, im realen Betrieb der Sensorvorrichtung den Betriebszustand der Versorgungsbatterie und den Energiebedarf der Sensorvorrichtung zu überwachen, um daraus einen optimierten Betrieb der Sensorvorrichtung abzuleiten. Die Erfindung berücksichtigt, dass, wie oben bereits ausgeführt wurde, der Energiebedarf der Sensorvorrichtung und für die Versorgungsbatterie relevante Betriebsparameter wie der Verlauf der Batterietemperatur nur schwierig und mit großen Unsicherheiten vorhersagbar sind. Die Überwachung und Auswertung des Energiebedarfs der Sensorvorrichtung und des Betriebszustands der Versorgungsbatterie im realen Betrieb der Sensorvorrichtung ermöglicht einen optimierten Betrieb der Sensorvorrichtung durch Anpassung des Betriebs der Sensorvorrichtung an die im realen Betrieb auftretenden Bedingungen gemäß der generierten Handlungsempfehlung.

Es werden in dem Auswertesystem Batterietypdaten verschiedener Batterietypen vorgehalten, wobei von dem Auswertesystem anhand der Betriebszustandsdaten der Versorgungsbatterie, des Energiebedarfs der Sensorvorrichtung und der Batterietypdaten ein Präferenzbatterietyp bestimmt wird und als Handlungsempfehlung der Betrieb der Sensorvorrichtung mit einer Batterie des Präferenzbatterietyps als Versorgungsbatterie generiert wird. Beispielsweise werden dabei als Batterietypdaten eines Batterietyps Datenblattangaben eines Herstellers des Batterietyps und/oder in der Vergangenheit erfasste Betriebszustandsdaten wenigstens einer Batterie des Batterietyps vorgehalten. Ferner werden als Batterietypdaten eines Batterietyps beispielsweise eine Batterienennkapazität, eine Batteriekapazität in Abhängigkeit von einer Batterietemperatur und/oder von einem Batterieentladestrom, eine Ausfallrate, ein Batterieinnenwiderstand, ein maximaler Batterieentladestrom, eine Batterienennspannung und/oder geometrische Batterieabmessungen vorgehalten.

Die Erfindung sieht vor, dass als Betriebszustandsdaten Batteriespannungen und Batterietemperaturen der Versorgungsbatterie erfasst werden. Die Batteriespannung und die Batterietemperatur sind die für den Betrieb der Sensorvorrichtung wichtigsten Indikatoren des Betriebszustands der Versorgungsbatterie, da von ihrem Verlauf insbesondere eine verfügbare Restkapazität der Versorgungsbatterie abhängt beziehungsweise ableitbar ist und weitere für die Beurteilung des Betriebszustands der Versorgungsbatterie relevante Größen abhängen. Beispielsweise kann aus den zu verschiedenen Messzeitpunkten erfassten Batteriespannungen und den zugehörigen Batterieentladeströmen eine zeitliche Entwicklung eines Batterieinnenwiderstandes der Versorgungsbatterie ermittelt werden, wenn die Batterieentladeströme bekannt sind oder erfasst werden. Aus der zeitlichen Entwicklung des Batterieinnenwiderstandes können vorteilhaft Rückschlüsse auf die Alterungsentwicklung der Versorgungsbatterie gewonnen werden.

Eine weitere Ausgestaltung der Erfindung sieht vor, dass als Betriebszustandsdaten zusätzlich Batterieentladeströme der Versorgungsbatterie erfasst werden. Diese Ausgestaltung der Erfindung ist, beispielsweise zur Ermittlung der zeitlichen Entwicklung des Batterieinnenwiderstandes, insbesondere dann vorteilhaft, wenn die Batterieentladeströme nicht anderweitig bekannt oder herleitbar sind.

Eine weitere Ausgestaltung der Erfindung sieht vor, dass von dem Auswertesystem eine Häufigkeitsverteilung der Batterietemperatur auf Temperaturintervalle und/oder wenigstens eine Verteilung von Werten einer der Batteriekenngrößen Batteriespannung, Batterieentladestrom, Batterieinnenwiderstand oder Batterieleistung in Abhängigkeit von der Batterietemperatur ermittelt und ausgewertet wird, um die Handlungsempfehlung zu generieren. Diese Ausgestaltung der Erfindung berücksichtigt, dass der Batteriezustand der Versorgungsbatterie wesentlich von der Batterietemperatur abhängt. Daher sind die Batterietemperatur und die Abhängigkeit anderer Batteriekenngrößen von der Batterietemperatur besonders wichtige Indikatoren für die Entwicklung des Batteriezustands der Versorgungsbatterie.

Die Erfindung sieht vor, dass der Energiebedarf aus Zeitanteilen, die auf den Betrieb der Sensorvorrichtung in verschiedenen Betriebsmodi jeweils entfallen, und Leistungen, die für den Betrieb der Sensorvorrichtung in den Betriebsmodi jeweils benötigt werden, ermittelt wird. Die Erfindung nutzt aus, dass die Sensorvorrichtung in verschiedenen Betriebsmodi in der Regel verschiedene Leistungen benötigt. Daher kann der Energiebedarf der Sensorvorrichtung aus den auf die verschiedenen Betriebsmodi entfallenden Zeitanteilen und den für die Betriebsmodi jeweils benötigten Leistungen ermittelt werden.

Eine weitere Ausgestaltung der Erfindung sieht vor, dass von dem Auswertesystem anhand der Betriebszustandsdaten der Versorgungsbatterie und des Energiebedarfs der Sensorvorrichtung eine Präferenzauslegung der Sensorvorrichtung bestimmt wird und als Handlungsempfehlung zusätzlich die Auslegung der Sensorvorrichtung gemäß der Präferenzauslegung generiert wird. Diese Ausgestaltung der Erfindung ermöglicht, die Auslegung der Sensorvorrichtung den im realen Betrieb der Sensorvorrichtung auftretenden Betriebsbedingungen anzupassen.

Die vorgenannte Ausgestaltung der Erfindung ermöglicht, einen Batterietyp der Versorgungsbatterie den im realen Betrieb der Sensorvorrichtung auftretenden Betriebsbedingungen anzupassen. Dabei wird die Sensorvorrichtung in einer ersten Betriebsphase mit einer ersten Versorgungsbatterie betrieben und in der ersten Betriebsphase wird anhand der Betriebszustandsdaten der Versorgungsbatterie, des Energiebedarfs der Sensorvorrichtung und der Batterietypdaten ein Präferenzbatterietyp bestimmt, der dem Energiebedarf angepasst ist. Mit anderen Worten werden in der ersten Betriebsphase der im realen Betrieb der Sensorvorrichtung anfallende Energiebedarf und die im realen Betrieb der Sensorvorrichtung anfallenden Betriebsbedingungen sowie ein diesem Energiebedarf und diesen Betriebsbedingungen angepasster Präferenzbatterietyp ermittelt. In einer zweiten Betriebsphase wird die erste Versorgungsbatterie durch eine Batterie des Präferenzbatterietyps ausgetauscht, wenn die erste Versorgungsbatterie keine Batterie des Präferenzbatterietyps ist. Dadurch kann die Sensorvorrichtung in der zweiten Betriebsphase mit einer Versorgungsbatterie betrieben werden, die dem tatsächlichen Energiebedarf und den realen Betriebsbedingungen optimal angepasst ist.

Eine weitere Ausgestaltung der Erfindung sieht vor, dass von dem Auswertesystem als Handlungsempfehlung zusätzlich eine zeitliche Verteilung von Betriebsmodi der Sensorvorrichtung generiert wird. Diese Ausgestaltung der Erfindung ermöglicht, die Verteilung der Betriebsmodi der Sensorvorrichtung den im realen Betrieb der Sensorvorrichtung auftretenden Betriebsbedingungen anzupassen.

Eine weitere Ausgestaltung der Erfindung sieht vor, dass das Auswertesystem in einer Datenwolke realisiert ist. Diese Ausgestaltung der Erfindung ermöglicht, bei der Auswertung der Betriebszustandsdaten in einer Datenwolke abgelegte Daten zu verwenden, so dass diese Daten leicht aktualisiert und erweitert werden können. Außerdem können die Betriebszustandsdaten in der Datenwolke in einfacher Weise anderen Anwendungen zugänglich gemacht werden und insbesondere zur Ergänzung dort gesammelter Batterietypdaten verwendet werden.

Eine weitere Ausgestaltung der Erfindung sieht vor, dass die Betriebszustandsdaten mit der Kommunikationseinheit durch Funkwellen übermittelbar sind. Dies ermöglicht vorteilhaft eine kabellose Übermittlung der Betriebszustandsdaten.

Eine Sensorvorrichtung und ein Auswertesystem sind erfindungsgemäß zur Durchführung des erfindungsgemäßen Verfahrens eingerichtet, wobei die Sensorvorrichtung eine Versorgungsbatterie zur Energieversorgung der Sensorvorrichtung, eine Sensoreinheit, mit der die Betriebszustandsdaten erfassbar sind, und eine Kommunikationseinheit, mit der die Betriebszustandsdaten einem Auswertesystem übermittelbar sind, umfasst.

Die Sensorvorrichtung und das Auswertesystem ermöglichen die Durchführung des erfindungsgemäßen Verfahrens mit den oben genannten Vorteilen.

Ein erfindungsgemäßes Antriebssystem umfasst die Sensorvorrichtung und das Auswertesystem, wobei die Sensorvorrichtung zur Erfassung von Maschinenmessdaten zu Zuständen des Antriebssystems eingerichtet ist. Insbesondere kann das Antriebssystem eine elektrische Maschine aufweisen und die Sensoreinheit der Sensorvorrichtung kann zur Erfassung von Vibrationen und/oder Temperaturen der elektrischen Maschine eingerichtet sein. Alternativ oder zusätzlich kann das Antriebssystem einen Stromrichter aufweisen und die Sensoreinheit der Sensorvorrichtung kann zur Erfassung von Temperaturen des Stromrichters eingerichtet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch ein Antriebssystem,
- FIG 2: ein Blockdiagramm eines Ausführungsbeispiels einer Sensorvorrichtung und eines Verfahrens zum Betrieb der Sensorvorrichtung,
- FIG 3: eine Verteilung von auf verschiedene Betriebsmodi entfallenden Zeitanteilen einer Sensorvorrichtung,
- FIG 4: Batterietypdaten eines Batterietyps,
- FIG 5: zeitliche Verläufe einer Batterieleistung und einer Batteriespannung einer Versorgungsbatterie,
- FIG 6: eine Häufigkeitsverteilung von Batterietemperaturen einer Versorgungsbatterie.

Einander entsprechende Teile sind in den Figuren mit denselben Bezugszeichen versehen.

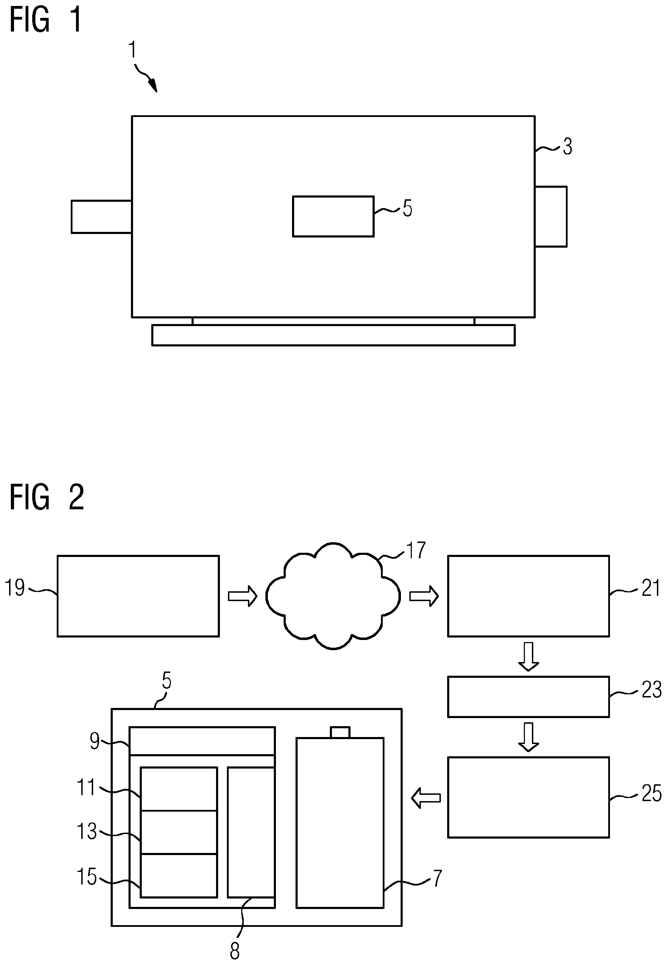

FIG 1 zeigt schematisch ein Antriebssystem 1. Das Antriebssystem 1 umfasst eine rotierende elektrische Maschine 3 und eine Sensorvorrichtung 5 zur Überwachung der elektrischen Maschine 3. Mit der Sensorvorrichtung 5 werden Maschinenmessdaten zu Zuständen der elektrischen Maschine 3 erfasst, beispielsweise Vibrationsmessdaten zu Vibrationen und/oder Temperaturmessdaten zu Temperaturen der elektrischen Maschine 3.

FIG 2 zeigt ein Blockdiagramm eines Ausführungsbeispiels der Sensorvorrichtung 5 und eines Verfahrens zum Betrieb der Sensorvorrichtung 5.

Die Sensorvorrichtung 5 umfasst eine Versorgungsbatterie 7 zur Energieversorgung der Sensorvorrichtung 5, eine Sensoreinheit 8, eine Kommunikationseinheit 9, eine Speichereinheit 11, eine Recheneinheit 13 und eine Zeitgebereinheit 15.

Mit der Sensoreinheit 8 werden die Maschinenmessdaten und Betriebszustandsdaten der Versorgungsbatterie 7 erfasst. Geeignete Betriebszustandsdaten werden unten näher beschrieben.

Mit der Kommunikationseinheit 9 werden von der Sensoreinheit 8 erfasste Maschinenmessdaten und Betriebszustandsdaten, gegebenenfalls nach einer Vorverarbeitung dieser Daten durch die Recheneinheit 13, einem Auswertesystem 17 übermittelt. Die Kommunikationseinheit 9 weist beispielsweise eine Sendeeinheit für Funkwellen auf, mit denen die Daten kabellos übermittelt werden, beispielsweise gemäß einem Bluetooth- oder WLAN-Standard.

Mit der Speichereinheit 11 werden insbesondere Programme zum Betrieb der Sensorvorrichtung 5 gespeichert. Ferner können mit der Speichereinheit 11 beispielsweise von der Sensoreinheit 8 erfasste Maschinenmessdaten und Betriebszustandsdaten zwischengespeichert werden.

Von der Recheneinheit 13 werden mit der Speichereinheit 11 gespeicherte Programme ausgeführt.

Mit der Zeitgebereinheit 15 wird insbesondere ein Taktsignal für die Zeitsteuerung der Sensorvorrichtung 5 vorgegeben.

Das Auswertesystem 17 ist beispielsweise in einer Datenwolke realisiert. Alternativ ist das Auswertesystem 17 beispielsweise auf einem Edge Device realisiert.

In dem Auswertesystem 17 werden Batterietypdaten verschiedener Batterietypen vorgehalten. Beispielsweise werden als Batterietypdaten eines Batterietyps Datenblattangaben 19 eines Herstellers des Batterietyps und/oder in der Vergangenheit erfasste Betriebszustandsdaten wenigstens einer Batterie des Batterietyps vorgehalten.

Von dem Auswertesystem 17 wird eine Auswertung 21 der Betriebszustandsdaten und Batterietypdaten in Abhängigkeit von einem Energiebedarf der Sensorvorrichtung 5 vorgenommen, bei der ein Präferenzbatterietyp bestimmt wird, der den Betriebszustandsdaten und dem Energiebedarf optimal angepasst ist. Als Ergebnis der Auswertung 21 wird von dem Auswertesystem 17 eine Handlungsempfehlung 23 zum Betrieb der Sensorvorrichtung 5 mit einer Batterie des Präferenzbatterietyps als Versorgungsbatterie 7 generiert. Wenn die Versorgungsbatterie 7 keine Batterie des Präferenzbatterietyps ist, wird ein Batterietausch 25 vorgenommen, bei dem die Versorgungsbatterie 7 durch eine Batterie des Präferenzbatterietyps ersetzt wird.

Die Sensorvorrichtung 5 wird in verschiedenen Betriebsmodi M1 bis M4 betrieben. Die Abfolge und die Zeitdauern der Betriebsmodi M1 bis M4 werden vorgegeben, beispielsweise durch eine Programmierung der Sensorvorrichtung 5, und sind daher bekannt, können jedoch durch eine Änderung der Vorgabe geändert werden. Ferner ist die von jedem der Betriebsmodi M1 bis M4 benötigte Leistung bekannt. Der Energiebedarf der Sensorvorrichtung 5 wird aus den Zeitanteilen, die auf die verschiedenen Betriebsmodi M1 bis M4 jeweils entfallen, und den Leistungen, die für den Betrieb der Sensorvorrichtung 5 in den Betriebsmodi M1 bis M4 jeweils benötigt werden, ermittelt.

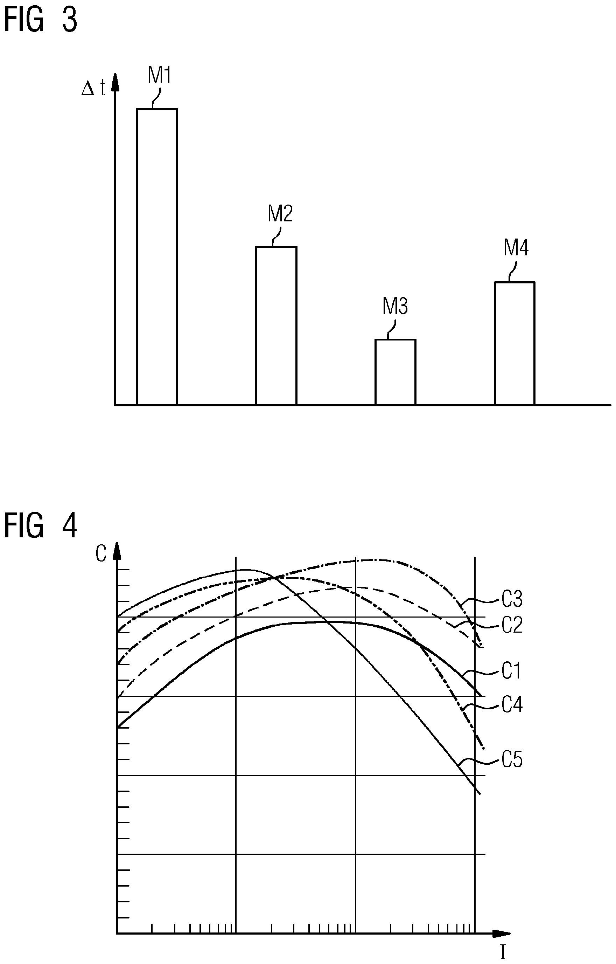

FIG 3 zeigt beispielhaft Zeitanteile Δt, die auf vier verschiedene Betriebsmodi M1 bis M4 der Sensorvorrichtung 5 entfallen. Beispielsweise ist ein erster Betriebsmodus M1 ein Schlafbetrieb, in dem die Sensorvorrichtung 5 vorwiegend inaktiv ist, ein zweiter Betriebsmodus M2 ist ein Messbetrieb zur Messung von Vibrationen der elektrischen Maschine 3, ein dritter Betriebsmodus M3 ist ein Messbetrieb zur Messung von Temperaturen der elektrischen Maschine 3 und ein vierter Betriebsmodus M4 ist ein Kommunikationsbetrieb zur Übermittlung von Daten an das Auswertesystem 17.

FIG 4 zeigt exemplarisch Batterietypdaten eines Batterietyps. Dargestellt sind Kapazitätsverläufe C1 bis C5 einer verfügbaren Batteriekapazität C einer Batterie des Batterietyps in Abhängigkeit von einem logarithmisch dargestellten Batterieentladestrom I für verschiedene Batterietemperaturen, die von einem ersten Kapazitätsverlauf C1 zu einem fünften Kapazitätsverlauf C5 abnehmen. Alternativ oder zusätzlich können als Batterietypdaten eines Batterietyps beispielsweise eine Batterienennkapazität, eine Ausfallrate, ein Batterieinnenwiderstand, ein maximaler Batterieentladestrom, eine Batterienennspannung und/oder geometrische Batterieabmessungen vorgehalten werden.

Als Betriebszustandsdaten werden mit der Sensoreinheit 8 zu verschiedenen Messzeitpunkten t₁, t₂ Batteriespannungen U und Batterietemperaturen T der Versorgungsbatterie 7 erfasst. Zusätzlich kann vorgesehen sein, dass mit der Sensoreinheit 8 als Betriebszustandsdaten auch Batterieentladeströme I der Versorgungsbatterie 7 erfasst wird, wenn die Batterieentladeströme I nicht bekannt beziehungsweise anderweitig ermittelbar ist.

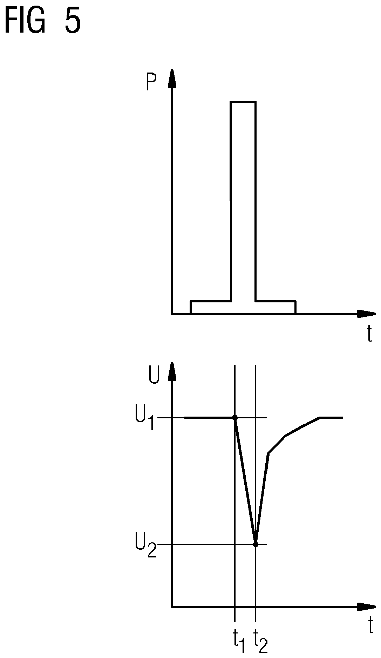

FIG 5 zeigt beispielhaft Verläufe einer Batterieleistung P und einer Batteriespannung U der Versorgungsbatterie 7 in Abhängigkeit von einer Zeit t in einem Funkpulsbetrieb der Sensorvorrichtung 5, in dem die Batterieleistung P nur pulsartig merklich von Null verschieden ist. Beispielsweise wird die Batteriespannung U zu einem ersten Messzeitpunkt t₁ kurz vor einem Leistungspuls und zu einem zweiten Messzeitpunkt t₂ kurz nach dem Leistungspuls gemessen. Aus der Differenz der Batteriespannungen U₁ = U(t₁) und U₂ = U(t₂) und einer Differenz der Batterieentladeströme I₁ = I(t₁) und I₂ = I(t₂) zu diesen Messzeitpunkten t₁, t₂ wird beispielsweise ferner ein Innenwiderstand R der Versorgungsbatterie 7 gemäß R = (U₁ - U₂) / (I₁ - I₂) ermittelt.

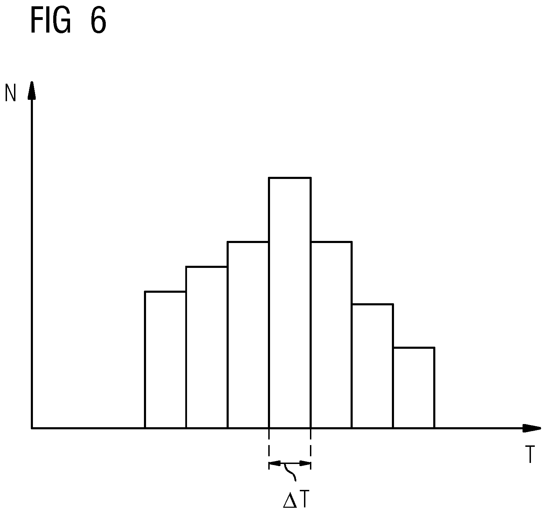

Die Betriebszustandsdaten werden bei der Auswertung 21 mit statistischen Methoden ausgewertet. FIG 6 zeigt beispielhaft eine statistische Auswertung erfasster Batterietemperaturen T in Form einer Häufigkeitsverteilung von Batterietemperaturen T, bei der eine Häufigkeit N von Batterietemperaturen T für verschiedene Temperaturintervalle ΔT ermittelt wird.

Alternativ oder zusätzlich kann bei der Auswertung 21 wenigstens eine Verteilung von Werten einer der Batteriekenngrößen Batteriespannung U, Batterieentladestrom I, Batterieinnenwiderstand R oder Batterieleistung P in Abhängigkeit von der Batterietemperatur T oder/und wenigstens ein zeitlicher Verlauf einer dieser Batteriekenngrößen oder der Batterietemperatur T ermittelt werden, um die Handlungsempfehlung 23 zu generieren. Statt einer zeitlichen Auswertung kann auch eine Auswertung in Abhängigkeit von Frequenzen erfolgen, die in einem Pulsbetrieb der Sensorvorrichtung 5 auftreten.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betrieb einer Sensorvorrichtung (5) zur Überwachung eines Antriebssystems, die eine Versorgungsbatterie (7) zur Energieversorgung der Sensorvorrichtung (5), eine Sensoreinheit (8), mit der Betriebszustandsdaten der Versorgungsbatterie (7) erfassbar sind, und eine Kommunikationseinheit (9), mit der die Betriebszustandsdaten einem Auswertesystem (17) übermittelbar sind, aufweist, wobei
- mit der Sensoreinheit (8) zu verschiedenen Messzeitpunkten (t₁, t₂) Betriebszustandsdaten der Versorgungsbatterie (7) erfasst werden,
- mit der Kommunikationseinheit (9) die Betriebszustandsdaten und von der Sensoreinheit (8) erfasste Maschinenmessdaten an das Auswertesystem (17) übermittelt werden
**dadurch gekennzeichnet, dass**
von dem Auswertesystem (17) ein Energiebedarf der Sensorvorrichtung (5) ermittelt und anhand der Betriebszustandsdaten und des Energiebedarfs eine Handlungsempfehlung zum optimierten Betrieb der Sensorvorrichtung (5) generiert wird,
wobei in dem Auswertesystem (17) Batterietypdaten verschiedener Batterietypen vorgehalten werden,
wobei von dem Auswertesystem (17) anhand der Betriebszustandsdaten, des Energiebedarfs und der Batterietypdaten ein Präferenzbatterietyp bestimmt wird und als Handlungsempfehlung der Betrieb der Sensorvorrichtung (5) mit einer Batterie des Präferenzbatterietyps als Versorgungsbatterie (7) generiert wird,
wobei die Betriebszustandsdaten mittels des Auswertesystems (17) mit statistischen Methoden ausgewertet werden,
wobei der Energiebedarf aus Zeitanteilen (Δt), die auf den Betrieb der Sensorvorrichtung (5) in verschiedenen Betriebsmodi (M1 bis M4) jeweils entfallen, und Leistungen, die für den Betrieb der Sensorvorrichtung (5) in den Betriebsmodi (M1 bis M4) jeweils benötigt werden, ermittelt wird, wobei als Betriebszustandsdaten Batteriespannungen (U) und Batterietemperaturen (T) der Versorgungsbatterie (7) erfasst werden.

2. Verfahren nach Anspruch 1,
**dadurch gekennzeichnet, dass** als Betriebszustandsdaten zusätzlich Batterieentladeströme (I) der Versorgungsbatterie (7) erfasst werden.

3. Verfahren nach Anspruch 1 oder 2,
**dadurch gekennzeichnet, dass** von dem Auswertesystem (17) eine Häufigkeitsverteilung der Batterietemperatur auf Temperaturintervalle (ΔT) und/oder wenigstens eine Verteilung von Werten einer der Batteriekenngrößen Batteriespannung (U), Batterieentladestrom (I), Batterieinnenwiderstand oder Batterieleistung (P) in Abhängigkeit von der Batterietemperatur (T) ermittelt und ausgewertet wird, um die Handlungsempfehlung zu generieren.

4. Verfahren nach einem der vorhergehenden Ansprüche, **dadurch gekennzeichnet, dass** von dem Auswertesystem (17) anhand der Betriebszustandsdaten und des Energiebedarfs eine Präferenzauslegung der Sensorvorrichtung (5) bestimmt wird und als Handlungsempfehlung zusätzlich die Auslegung der Sensorvorrichtung (5) gemäß der Präferenzauslegung generiert wird.

5. Verfahren nach einem der vorhergehenden Ansprüche, **dadurch gekennzeichnet, dass** als Batterietypdaten eines Batterietyps Datenblattangaben (19) eines Herstellers des Batterietyps und/oder in der Vergangenheit erfasste Betriebszustandsdaten wenigstens einer Batterie des Batterietyps vorgehalten werden.

6. Verfahren nach einem der vorhergehenden Ansprüche, **dadurch gekennzeichnet, dass** als Batterietypdaten eines Batterietyps eine Batterienennkapazität, eine Batteriekapazität (C) in Abhängigkeit von einer Batterietemperatur (T) und/oder von einem Batterieentladestrom (I), eine Ausfallrate, ein Batterieinnenwiderstand, ein maximaler Batterieentladestrom, eine Batterienennspannung und/oder geometrische Batterieabmessungen vorgehalten werden.

7. Verfahren nach einem der vorhergehenden Ansprüche,
**dadurch gekennzeichnet, dass** von dem Auswertesystem (17) als Handlungsempfehlung zusätzlich eine zeitliche Verteilung von Betriebsmodi (M1 bis M4) der Sensorvorrichtung (5) generiert wird.

8. Verfahren nach einem der vorhergehenden Ansprüche,
**dadurch gekennzeichnet, dass** das Auswertesystem (17) in einer Datenwolke realisiert ist.

9. Verfahren nach einem der vorhergehenden Ansprüche,
**dadurch gekennzeichnet, dass** die Betriebszustandsdaten mit der Kommunikationseinheit (9) durch Funkwellen übermittelbar sind.

10. Sensorvorrichtung (5) und Auswertesystem (17), wobei die Sensorvorrichtung (5) und das Auswertesystem (17) zur Durchführung des Verfahrens gemäß einem der vorhergehenden Ansprüche eingerichtet sind, die Sensorvorrichtung (5) umfassend:
- eine Versorgungsbatterie (7) zur Energieversorgung der Sensorvorrichtung (5),
- eine Sensoreinheit (8), mit der die Betriebszustandsdaten erfassbar sind, und
- eine Kommunikationseinheit (9), mit der die Betriebszustandsdaten dem Auswertesystem (17) übermittelbar sind.

11. Antriebssystem (1) mit der Sensorvorrichtung (5) und dem Auswertesystem (17) gemäß Anspruch 10, wobei die Sensorvorrichtung (5) zur Erfassung von Maschinenmessdaten zu Zuständen des Antriebssystems (1) eingerichtet ist.

12. Antriebssystem (1) nach Anspruch 11,
**gekennzeichnet durch** eine elektrische Maschine (3).

## Claims

1. Method for operating a sensor device (5) for monitoring a drive system, which has a supply battery (7) for supplying power to the sensor device (5), a sensor unit (8), with which operating state data of the supply battery (7) can be detected, and a communication unit (9), with which the operating state data can be transmitted to an evaluation system (17), wherein
- operating state data of the supply battery (7) is detected with the sensor unit (8) at different measuring time instants (t₁, t₂),
- the operating state data and machine measuring data acquired by the sensor unit (8) is transmitted to the evaluation system (17) with the communication unit (9)
**characterised in that**
an energy demand of the sensor device (5) is determined by the evaluation system (17) and the operating state data and the energy demand are used to generate a recommendation for action for optimized operation of the sensor device (5), wherein in the evaluation system (17) battery type data of various battery types is provided,
wherein a preferential battery type is determined by the evaluation system (17) on the basis of the battery state data, the energy demand and the battery type data, and as a recommendation for action the operation of the sensor device (5) is generated with a battery of the preferential battery type as a supply battery (7),
wherein the battery state data is evaluated by means of the evaluation system (17) with statistical methods,
wherein the energy demand is determined from time intervals (Δt), which are allocated to the operation of the sensor device (5) in various operating modes (M1 to M4) in each case and powers which are required for the operation of the sensor device (5) in the operating modes (M1 to M4) respectively,
wherein battery voltages (U) and battery temperatures (T) of the supply battery (7) are detected as operating state data.

2. Method according to claim 1,
**characterised in that** battery discharge currents (I) of the supply battery (7) are additionally detected as operating state data.

3. Method according to claim 1 or 2,
**characterised in that** a frequency distribution of the battery temperature among temperature intervals (ΔT) and/or at least one distribution of values of one of the battery parameters battery voltage (U), battery discharge current (I), battery internal resistance or battery power (P) is determined and evaluated by the evaluation system (17) as a function of the battery temperature (T) in order to generate the recommendation for action.

4. Method according to one of the preceding claims,
**characterised in that** the evaluation system (17) determines a preferential design of the sensor device (5) on the basis of the operating state data and the energy demand and the design of the sensor device (5) is additionally generated as a recommendation for action in accordance with the preferential design.

5. Method according to one of the preceding claims,
**characterised in that** data sheet specifications (19) of a manufacturer of the battery type and/or operating state data of at least one battery of the battery type which is detected in the past are provided as battery type data of a battery type.

6. Method according to one of the preceding claims,
**characterised in that** a battery rated capacitance, a battery capacitance (C) are provided as battery type data of a battery type as a function of a battery temperature (T) and/or a battery discharge current (I), a failure rate, a battery internal resistance, a maximum battery discharge current, a battery rated voltage and/or geometric battery dimensions.

7. Method according to one of the preceding claims,
**characterised in that** a temporal distribution of operating modes (M1 to M4) of the sensor device (5) is additionally generated by the evaluation system (17) as a recommendation for action.

8. Method according to one of the preceding claims,
**characterised in that** the evaluation system (17) is realized in a cloud.

9. Method according to one of the preceding claims,
**characterised in that** the operating state data can be transmitted with the communication unit (9) by means of radio waves.

10. Sensor device (5) and evaluation system (17), wherein the sensor device (5) and the evaluation system (17) are designed to carry out the method according to one of the preceding claims, the sensor device (5) comprising,
- a supply battery (7) for supplying energy to the sensor device (5),
- a sensor unit (8), with which the operating state data can be detected, and
- a communication unit (9) with which the operating state data can be transmitted to the evaluation system (17).

11. Drive system (1) with the sensor device (5) and the evaluation system (17) according to claim 10, wherein the sensor device (5) is designed to detect machine measuring data relating to states of the drive system (1).

12. Drive system (1) according to claim 11, **characterised by** an electric machine (3).

## Revendications

1. Procédé pour faire fonctionner un dispositif (5) capteur pour le contrôle d'un système d'entraînement, qui a une batterie (7) d'alimentation pour l'alimentation en énergie électrique du dispositif (5) capteur, une unité (8) de capteur, par laquelle des données d'état de fonctionnement de la batterie (7) d'alimentation peuvent être détectées, et une unité (9) de communication, par laquelle les données d'état de fonctionnement peuvent être transmises à un système (17) d'évaluation, dans lequel
- par l'unité (8) de capteur, on détecte des données d'état de fonctionnement de la batterie (7) d'alimentation à des instants (t₁, t₂) de mesure différents,
- par l'unité (9) de communication, on transmet au système (17) d'évaluation les données d'état de fonctionnement et des données de mesure de machine détectées par l'unité (8) de capteur,
**caractérisé en ce que**
on détermine, par le système (17) d'évaluation, un besoin en énergie du dispositif (5) capteur et, à l'aide des données d'état de fonctionnement et du besoin en énergie, on crée une recommandation d'action pour le fonctionnement optimisé du dispositif (5) capteur,
dans lequel on conserve dans le système (17) d'évaluation des données de type de batterie de type de batterie différent,
dans lequel on détermine par le système (17) d'évaluation, à l'aide des données d'état de fonctionnement, du besoin en énergie et des données de type de batterie, un type de batterie ayant la préférence et on crée, comme recommandation d'action, le fonctionnement du dispositif (5) capteur avec une batterie du type de batterie ayant la préférence comme batterie (7) d'alimentation,
dans lequel on évalue les données d'état de fonctionnement au moyen du système (17) d'évaluation par des méthodes statistiques,
dans lequel on détermine le besoin en énergie à partir de parties (Δt) de temps, qui se produisent respectivement sur le fonctionnement du dispositif (5) capteur dans divers modes (M1 à M4) de fonctionnement, et des puissances, qui sont nécessaires respectivement pour le fonctionnement du dispositif (5) capteur dans les modes (M1 à M4) de fonctionnement, dans lequel on détecte comme données d'état de fonctionnement des tensions (U) de batterie et des températures (T) de batterie de la batterie (7) d'alimentation.

2. Procédé suivant la revendication 1,
**caractérisé en ce que** l'on détecte comme données d'état de fonctionnement supplémentairement des courants (I) de charge de batterie de la batterie (7) d'alimentation.

3. Procédé suivant la revendication 1 ou 2,
**caractérisé en ce que** l'on détermine et on évalue, par le système (17) d'évaluation, une répartition de fréquences de la température de la batterie sur des intervalles (ΔT) de température et/ou au moins une répartition de valeurs de l'une des grandeurs de batterie, tension (U) de batterie, courant (I) de charge de batterie, résistance interne de batterie ou puissance (P) de batterie, en fonction de la température (T) de la batterie, afin de créer la recommandation d'action.

4. Procédé suivant l'une des revendications précédentes, **caractérisé en ce que** l'on détermine par le système (17) d'évaluation, à l'aide de données d'état de fonctionnement et du besoin en énergie, une conception ayant la préférence du dispositif (5) capteur et on crée comme recommandation d'action supplémentairement la conception du dispositif (5) capteur suivant la conception ayant la préférence.

5. Procédé suivant l'une des revendications précédentes, **caractérisé en ce que** l'on conserve, comme données de type de batterie d'un type de batterie, des indications (19) de feuille de donnée d'un fabricant du type de batterie et/ou des données d'état de fonctionnement détectées dans le passé d'au moins une batterie du type de batterie.

6. Procédé suivant l'une des revendications précédentes, **caractérisé en ce que** l'on conserve, comme données de type de batterie d'un type de batterie, une capacité intérieure de batterie, une capacité (C) de batterie en fonction d'une température (T) de batterie et/ou d'un courant (I) de charge de batterie, un taux de défaillance, une résistance interne de batterie, un courant de charge de batterie maximum, une tension intérieure de batterie et/ou des dimensions géométriques de batterie.

7. Procédé suivant l'une des revendications précédentes, **caractérisé en ce que** l'on crée, par le système (17) d'évaluation, comme recommandation d'action supplémentairement une répartition dans le temps de modes (M1 à M4) de fonctionnement du dispositif (5) capteur.

8. Procédé suivant l'une des revendications précédentes, **caractérisé en ce que** le système (17) d'évaluation est réalisé en un nuage de données.

9. Procédé suivant l'une des revendications précédentes, **caractérisé en ce que** les données d'état de fonctionnement peuvent être transmises par ondes radio par l'unité (9) de communication.

10. Dispositif (5) capteur et système (17) d'évaluation, dans lequel le dispositif (5) capteur et le système (17) d'évaluation sont agencés pour effectuer le procédé suivant l'une des revendications précédentes, le dispositif (5) capteur comprenant :
- une batterie (7) d'alimentation pour l'alimentation en énergie électrique du dispositif (5) capteur,
- une unité (8) de capteur, par laquelle les données d'état de fonctionnement peuvent être détectées, et
- une unité (9) de communication, par laquelle des données d'état de fonctionnement peuvent être transmises au système (17) d'évaluation.

11. Système (1) d'entraînement comprenant le dispositif (5) capteur et le système (17) d'évaluation suivant la revendication 10, dans lequel le dispositif (5) capteur est agencé pour la détection de données de mesure de machine par rapport à des états du système (1) d'entraînement.

12. Système (1) d'entraînement suivant la revendication 11, **caractérisé par** une machine (3) électrique.
